Europäisches Patentamt

European Patent Office

Office européen des brevets

(11) Publication number: **0 193 392**
**A1**

(12) # EUROPEAN PATENT APPLICATION

(21) Application number: **86301369.4**

(22) Date of filing: **26.02.86**

(51) Int. Cl.⁴: **A 22 C 7/00**

(30) Priority: **26.02.85 US 705762**

(43) Date of publication of application:
**03.09.86 Bulletin 86/36**

(84) Designated Contracting States:
**AT BE CH DE FR GB IT LI LU NL SE**

(71) Applicant: **OSCAR MAYER FOODS CORPORATION**
**910, Mayer Avenue**
**Madison Wisconsin 53707(US)**

(72) Inventor: **Anderson, James E.**
**625, Harmony Hill Drive**
**Madison Wisconsin(US)**

(72) Inventor: **Holmes, Terry L.**
**4423 Oak Court**
**Monoma Wisconsin 53716(US)**

(74) Representative: **Baillie, Iain Cameron et al,**
**c/o Ladas & Parry Isartorplatz 5**
**D-8000 München 2(DE)**

(54) Process and device for knitting proteinaceous patties.

(57) A first proteinaceous patty (12) is contacted with a second proteinaceous patty (14) and in the area of contact projections (32) are inserted through the first patty (12) and at least halfway into the second patty (14).

The apparatus comprises a holding means (18) for maintaining the shape of the patties (12,14) during knitting and a knitting plate (26) containing a plurality of projections (32). The plate (26) is movably connected to the holding means (12) permitting movement of the projections (12,14) through a first patty (12) and at least halfway through a second patty (14). An ejection means (44) is also provided which is movably attached to the knitting plate (26) permitting removal of the knitting meat patties (12,14).

FIG.2

ase 3385

# PROCESS AND DEVICE FOR
## KNITTING PROTEINACEOUS PATTIES

## FIELD OF THE INVENTION

This invention relates to a device and a process for knitting proteinaceous patties together wherein a first meat patty is contacted with a second meat patty and condiments are placed between the patties. Projections are inserted through one patty and at least halfway through the second patty to knit the patties together.

## DESCRIPTION OF THE PRIOR ART

There have been attempts at preparing hamburgers wherein condiments are inserted inside the hamburger cavities. For example, U.S. Patent 3,909,881 to Anderson pertains to a hamburger having a hollow cavity extending through the side of the hamburger and is adapted to receiving condiments after cooking. The method of preparing the hamburger comprises stuffing hamburger meat into a mold, inserting a tin foil-type packet into the hamburger meat through a side and packaging the formed hamburger for storage and sale. The hamburger is cooked in the normal manner after which the tin foil is removed from the packet of the cooked hamburger and condiments are inserted into the cavity. This reference makes no attempt to knit hamburger patties together.

U.S. Patent 2,937,092 to Zitin pertains to a method and apparatus for making a combined meat and cheese product in which the cheese portion is completely surrounded by the meat. This is accomplished by molding meat with a hole in the center and then pouring the cheese into the molded hole. This invention does not relate to knitting meat patties together.

U.S. Patent 3,999,248 to Mauer et al. is directed to an apparatus and method for knitting proteinaceous fragments into a unified mass. The method includes the steps of accumulating the meat fragments into a wad and then knitting the wad to form a unified proteinaceous patty. There is no attempt, however, to put a condiment inside of these patties.

In non-meat areas U.S. Patent 2744,476 to Suzuki pertains to a device for pie edge crimping and trimming. In this patent a means for crimping the edges of pie dough together is described, but this patent does not pertain to knitting the pieces together. U.S. Patent 4,430,053 to Launay is another device for crimping pies or tarts but a knitting device is not disclosed. In a non-food area U.S. Patent 3,552,711 to DeLaney et al. describes the use of intermittent teeth to cut and seal laminations. Again, a knitting device is not described.

BRIEF DESCRIPTION OF THE DRAWINGS

Figure 1 is a perspective view of a knitting apparatus.

Figure 2 is a cross-sectional view along 2-2 of figure 1.

- 3 -

0193392

Figure 3 is a cross-sectional view showing the first stage of the knitting action.

Figure 4 is a cross-sectional view showing the completion of the knitting action.

Figure 5 is a perspective view of the knitting apparatus.

Figure 6 is a cross-sectional view showing the first stage of the ejection action.

Figure 7 is a cross-sectional view of figure 5 showing the completed ejection action.

Figure 8 is a bottom plane view of the projection plate.

Figure 9 is a partial cross-sectional view from figure 6.

## SUMMARY OF THE INVENTION

This invention pertains to a device for knitting proteinaceous patties together which comprises placing a first proteinaceous patty in contact with a second proteinaceous patty and inserting in the area of contact projections through one patty and at least halfway through into the second patty.

An apparatus is also described for knitting layers of proteinaceous patties together which comprises a holding means for maintaining the shape of the proteinaceous patties together during knitting and a knitting plate containing a plurality of projections. The knitting plate is movably connected to the holding means permitting movement of projections through the first patty and at least halfway through a second patty. An ejection means for removing the knitted patties from the apparatus is also provided.

When this invention is employed, two proteinaceous patties with a condiment inserted between them are knitted together so that the patties hold together during cooking. Gases or juices from the
condiment do not escape through the patties.

## DETAILED DESCRIPTION OF THE INVENTION

According to the present invention proteinaceous patties are first prepared which may be of
any suitable proteinaceous material such as meats or
vegetables.  Suitable meats are ground beef, pork,
turkey and chicken.  A suitable vegetable is texturized
vegetable protein.  The patties are generally about three to four
inches (76.2mm to 101.6mm) in diameter and approximately a
¼ inch (6.35mm) thick.  However, other diameters and thicknesses
may be employed.  The patties may be of any shape
such as round, square or fanciful shapes.  A first
patty is placed on a level surface and a condiment
is then added to the center of the patty.  The
condiment may be of a variety of materials such as
sauces, spices, cheeses, vegetables, etc.  Next, a
second patty is positioned over the condiment and
above the first patty.  The periphery of each patty
are permitted to contact.  In order to knit the
patties together projections are inserted into the
periphery of the patties.  The projections must
protrude through the first patty and at least halfway into the second patty.  Preferably the projections
do not go all the way through the second patty.  The
projections may be of any shape such as round,
rectangular, oval or rectangular with rounded edges.
It is preferred that the projections be of a rectangular
shape or rectangular shape with rounded edges so
that the indentations will approximate the look of a
cube steak.  For cosmetic reasons slight indentations
may be placed into the surface of the center of the
second patty to give a uniform cubed steak look to
the patty.

The projections should be approximately a sixteenth to three eighths of an inch (1.59mm to 9.5mm) in diameter along the widest portion that will be insert into the proteinaceous material. Preferably the projections will have a side wall taper resulting in the thinnest cross-sectional area at the point which first is inserted into the meat. The taper angle suitably is from about two to ten degrees based on the center line of the projection. It has been found that the distance between the projections should not be greater than three eighths of an inch (9.5mm) and preferably are not greater than one quarter inch (6.35mm) to prevent condiment juices from extruding through the knitted patty during cooking.

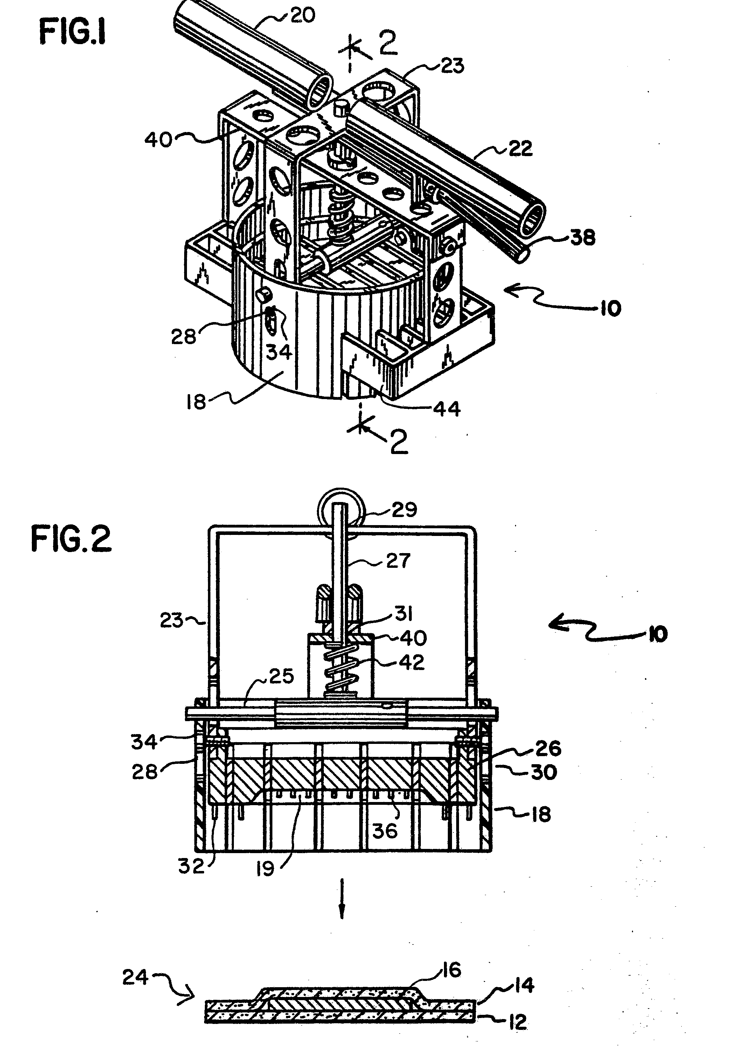

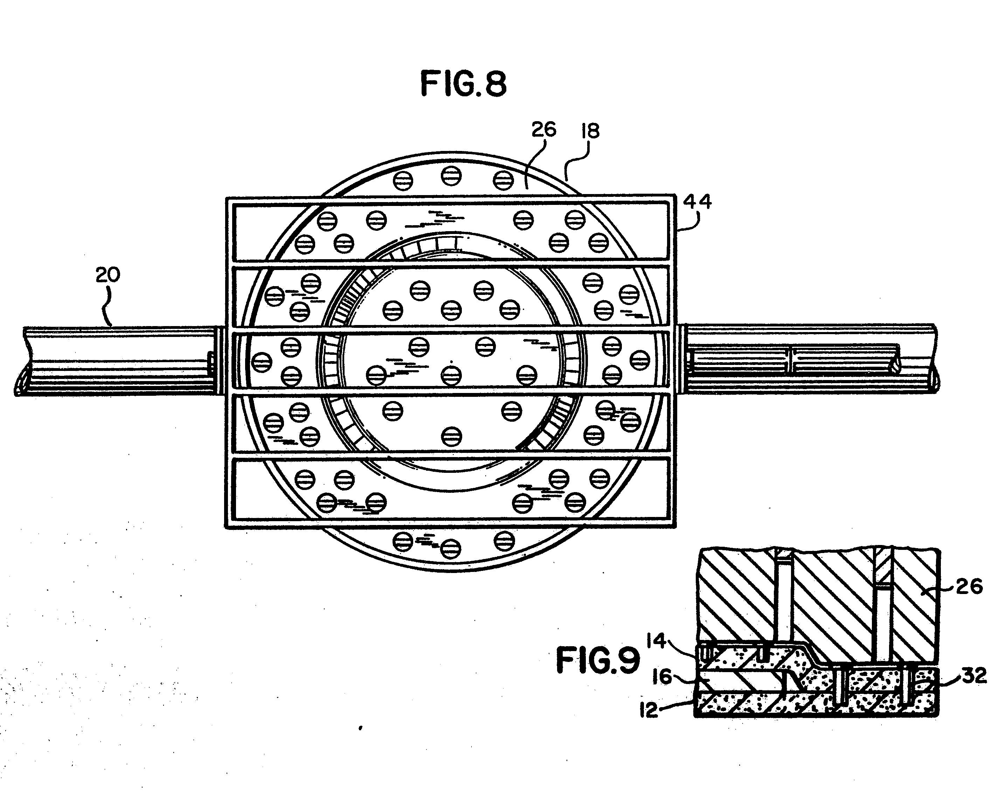

Now referring to the figures, device 10 is shown which is suitable for performing a knitting operation. As can be seen in figure 2 first patty 12 is placed under second patty 14 with a condiment 16 inserted between the patties generally shown as 24. The knitting operation commences with an operator manually holding handles 20 and 22 and placing device 10 over the condiment filled patties 24. Handles 20 and 22 are connected to projection plate 26 by means of first connection bar 23. As the operator places device 10 over patties 24, skirt 18 which is comprised of a circular tube, surrounds patties 24. Skirt 18 is connected to cross beam 25 which is connected to upright beam 27. Upright beam 27 slidably contacts first connecting bar 23 at point 29 and slidably contacts second connection bar 40 at point 31. Skirt 18 is also slidably connected to projection plate 26 at points 28 and 30. As the operator continues to press down on handles 20 and 22, periphery projections 32 of project plate 26 move downward and through patty 14 and at least halfway through patty 12. Skirt 18 maintains the shape of the patty during the penetration. The downward travel of projection plate 26 is limited by stop 34 in skirt 18. Protection plate 26 also has cavity section 19 containing center projections 36 which partially penetrate the center of patty 14 for cosmetic affects. Figure 8 illustrates a pattern of periphery projections 32 and center projection 36.

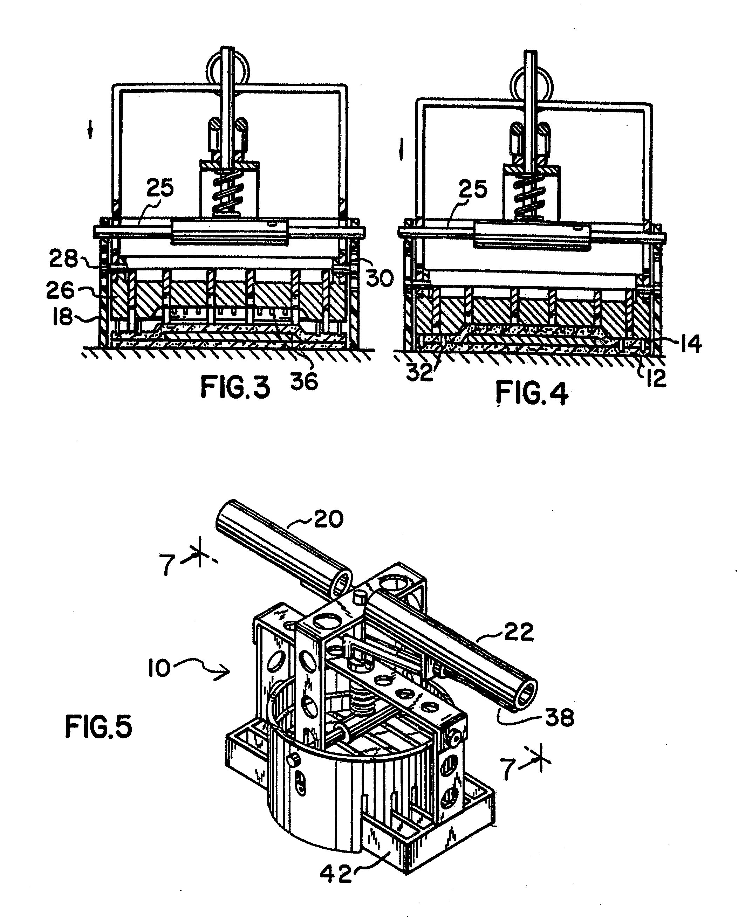

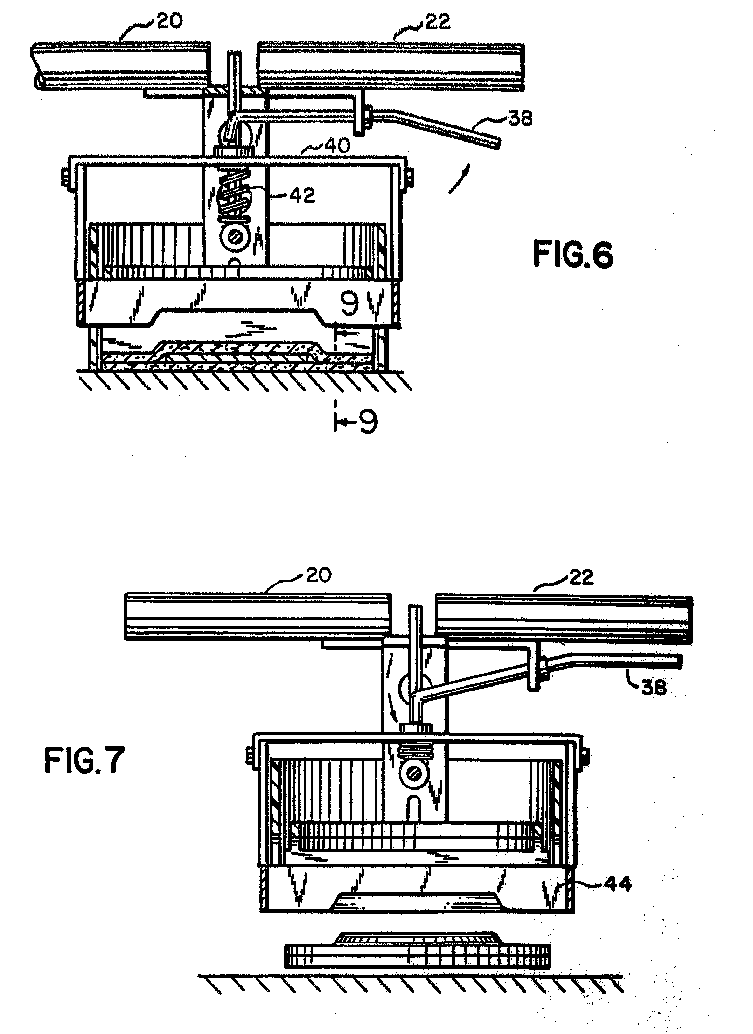

After the penetration action has been completed as shown in figure 4, the patties have been knitted together and must be ejected from device 10. To accomplish this the operator lifts handles 20 and 22 and simultaneously squeezes on ejection handle 38 as shown in figure 6. As ejection handle 38 moves up, second connection bar 40 which is urged against spring 42 moves downward. The downward movement of second connection bar 40 also causes the downward movement of ejection bars 44 which effects the separation of patties 24 from projection plate 26 and thus removes the patties from device 10. Ejection bars 44 passes through projection plate 26 by means of slots 46 in the projection plate. Slots 46 must be sufficiently wider than ejection bars 44 to allow air to pass through the slots while the patties are being ejected or a vacuum will be created. As the operator releases ejection handle 38, spring 42 urges connection bar 40 and ejection bars 44 upward thus readying the device for knitting another pair of patties.

While the above describes embodiments of the present invention it is to be understood the invention is not to be limited to these embodiments.

## CLAIMS

1. A process for knitting proteinaceous patties together which comprises placing a first proteinaceous patty in contact with a second proteinaceous patty and inserting at the contact area projections through the first patty and at least halfway into the second patty.

2. A process according to claim 1 wherein the proteinaceous material is selected from the group consisting of ground beef, pork, turkey, chicken and texturized vegetable protein.

3. A process according to claim 1 or 2 further comprising a condiment between the patties.

4. A process according to claim 3 wherein the condiment is selected from the group consisting of sauces, spices, cheeses, and vegetables.

5. A process according to any preceding claim wherein the patties are round or square shape.

6. A process according to any preceding claim wherein the projections are round, rectangular, rectangular with rounded edges or oval shaped.

7. A process according to any preceding claim wherein the projections are 1/16 of an inch (1.59mm) to 3/8 of an inch (9.5mm) in diameter.

8. A process according to any preceding claim wherein the projections are tapered from two to ten degrees from their center line.

9. A process according to any preceding claim wherein the projections are inserted around the periphery of the patties.

10. A process according to any preceding claim wherein the projections are not greater than 3/8 of an inch (9.5mm) apart.

11. A process according to claim 10 wherein the projections are not greater than ¼ of an inch (6.35mm) apart.

12. An apparatus for knitting layers of proteinaceous patties together which comprises a holding means for maintaining the shape of the patties during knitting; a projection plate containing a plurity of projections, said plate movably connected to the holding means permitting movement of the projections through a first patty and at least halfway through a second patty; and an ejection means for removing the knitted patties from the projections.

13. An apparatus according to claim 12 wherein the holding means is a circular tube.

14. An apparatus according to claim 12 further comprising handles to be grasped by an operator.

15. An apparatus according to any preceding claim wherein the projection plate comprises a plurality of ————————— periphery projections and a cavity section.

16. An apparatus according to claim 15 wherein the cavity section further comprises center projections.

17. An apparatus according to claim 14 wherein the ejection means further comprises an ejection handle, ejection bars and a connection bar in contact with the ejection handle and connected to the ejection bars.

18. An apparatus according to claim 17 wherein the ejection handle is pivotally mounted to the manual holding means.

19. An apparatus according to claim 18 wherein the ejection means further comprises a spring in contact with the connection bar, said spring urging the connection bar in an upward direction.

**FIG.1**

**FIG.2**

25

28
26
18

30

**FIG.3**  36

25

32     **FIG.4**     14
                      12

20

7

22

10

38

**FIG.5**

7

42

0193392

FIG.6

FIG.7

0193392

FIG.8

FIG.9

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-2 398 636 (G.R. HENNY et al.) * Page 1, lines 13-26; figures 3-9 * | 1,2 | A 22 C 7/00 |
| A | | 4,5,12 | |
| A | FR-A-2 365 961 (ETS CHIRON GABRIEL ET CIE S.A.) * Claim 1; figures 1,2 * | 1,12 | |
| D,A | US-A-3 999 248 (J.E. MAUER et al.) | | |
| A | US-A-3 131 066 (A.D. MITZEFELT) | | |
| D,A | US-A-3 909 881 (C.O. ANDERSON) | | **TECHNICAL FIELDS SEARCHED (Int. Cl 4)** A 22 C A 23 L |
| D,A | US-A-2 744 475 (N. AYRES) | | |
| D,A | US-A-3 552 711 (G.E. DELANEY et al.) | | |

The present search report has been drawn up for all claims

| Place of search THE HAGUE | Date of completion of the search 09-06-1986 | Examiner NEHRDICH H.J |
|---|---|---|